# EUROPEAN PATENT APPLICATION

(11) **EP 1 883 005 A1**
(43) Date of publication of application: **30.01.2008**
(21) Application number: 06118101.2
(22) Date of filing: 28.07.2006
(51) Int. Cl.: G06F 3/023

(54) **Keypad and handheld electronic device having keys with phonetically corresponding latin and non-latin characters**

(71) Applicant: Research In Motion Limited, Waterloo, Ontario N2L 3W8 (CA)
(72) Inventor: Pletikosa, Velimir, Kitchener, Ontario N2M 2Z9 (CA); Scott, Sherryl Lee, Toronto, Ontario M5T 1Y9 (CA)
(74) Representative: Fennell, Gareth Charles

(57) **Abstract**

An improved handheld electronic device and keypad provide non-Latin characters, such as letters from the Greek alphabet, that are arranged to phonetically correspond with the positioning of Latin characters of a QWERTY keypad. In one embodiment, many of the keys of the keypad have both a Latin character and a non-Latin character that phonetically correspond with one another.

## Description

### BACKGROUND

### Field

The disclosed and claimed concept relates generally to handheld electronic devices and, more particularly, to a handheld electronic device having a keypad wherein at least some of the keys have a non-Latin character assigned thereto.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Due to the small size of typical handheld electronic devices, and because some handheld electronic devices have limited space for keys, the entry of text in multiple languages can be difficult, particularly if the different languages employ different alphabets of characters. While some attempts have been made to provide a keypad having characters from different languages assigned to the keys thereof, such efforts have not been without limitation.

As is understood in the relevant art, since handheld electronic devices typically are relatively small and space thereon is at a premium, a user's attention to such a device is similarly at a premium. Previous efforts to provide characters from multiple alphabets on the keys of a handheld electronic device have largely been more distracting than useful to a user. It thus would be desired to provide a handheld electronic device and keypad that enable input in multiple languages in an improved fashion.

### BRIEF DESCRIPTION OF THE DRAWING

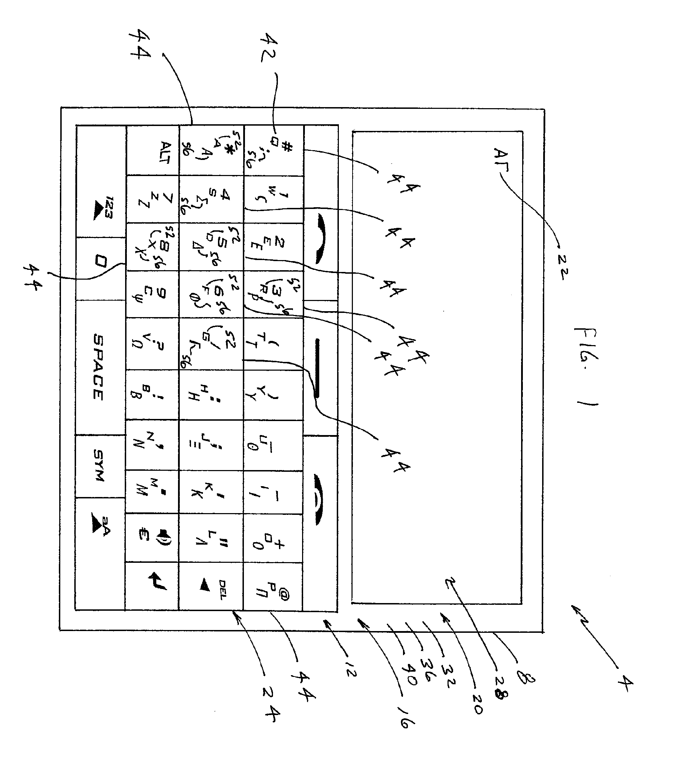

A full understanding of the disclosed and claimed concept can be gained from the following Description when read in conjunction with the accompanying drawing in which Fig. 1 schematically depicts an improved handheld electronic device in accordance with the disclosed and claimed concept having an improved keypad in accordance with the disclosed and claimed concept.

### DESCRIPTION

An improved handheld electronic device 4 in accordance with the disclosed and claimed concept is depicted generally in Fig. 1. The handheld electronic device 4 can be generally stated to include a housing 8 upon which are disposed an input apparatus 12, a processor apparatus 16, and an output apparatus 20. The input apparatus 12 comprises a keypad 24 that is structured to provide input to the processor apparatus 16. The output apparatus 20 comprises a display 28 that receives output signals from the processor apparatus 16 and that provides visual output 22.

The processor apparatus 16 interfaces with the input apparatus 12 and the output apparatus 20. The processor apparatus 16 comprises a processor 32, a memory 36, and a number of routines 40. The routines 40 are stored in the memory 36 and are executable on the processor 32.

As can be understood from Fig. 1, the keypad 24 comprises a plurality of keys 44, many of which have a plurality of characters 48 assigned thereto. Specifically, many of the keys 44 each have both a Latin character 52 and a non-Latin character 56 assigned thereto. As employed herein, the expression "Latin character" and variations thereof shall refer broadly to the twenty-six Latin letters A-Z, whether in upper case or lower case form. As employed herein, the expression "non-Latin character" and variations thereof shall refer broadly refer to any letter, character, or linguistic element, other than the twenty-six Latin letters, and that may be from an alphabet, expressly including the Greek alphabet, regardless of the historic origins of the language to which the letter, character, linguistic element, or alphabet pertains, but is not intended to include any of the ten Arabic digits 0-9.

The keys 44 generally each serve as input members that are actuatable to provide input to the processor apparatus 16. When a particular one of the routines 40 is being executed on the processor 32, an actuation of one of the keys 44 causes, for instance, the Latin character 52 assigned thereto to be input to the processor apparatus 16. When another of the routines 40, for example, is being executed on the processor 32, the non-Latin character assigned to such key 44 is input to the processor apparatus 16. It is understood, however, that various other types of routines 44 may be employed wherein either of the Latin and non-Latin characters 52 and 56 assigned to a particular key 44 can be input to the processor apparatus 16, such as with the use of a particular key actuation method, a preceding keystroke as an <ALT> key actuation, or other such methodology.

In the present exemplary embodiment of the handheld electronic device 4, the non-Latin characters 56 assigned to the various keys 44 are letters from the Greek alphabet. While the numeral 56 will hereafter be used interchangeable both for the elements "non-Latin character" and "Greek character", it is understood that such use is not intended to limit the definition of "non-Latin character" to Greek characters, and rather can comprise characters from other alphabets, as indicated above.

Advantageously, many of the keys 44 have both a Latin character 52 and a Greek character 56 assigned thereto wherein the Latin and Greek characters 52 and 56 phonetically correspond with one another. That is, such characters can be used to form substantially the same spoken sound. For instance, the Greek character 56 <A> (alpha) and the Latin character 52 <A> share the same key 44. Similarly, the Greek character 56 <Σ> (sigma) and the Latin character 52 <S> share the same key 44. In some instances, the Latin character 52 and the non-Latin character 56 which share the same key 44 can be selected based on visual similarity rather than phonetic similarity, in appropriate circumstances. For instance, the Greek character 56 <X> (chi) and the Latin character 52 <X> share the same key 44. In this particular example, no single Latin letter phonetic corresponds with the Greek character <X> (chi), and thus the Greek character 56 <X> (chi) and the Latin character 52 <X> share the same key 44 based upon visual similarity. Other combinations will be apparent from the teachings herein.

It also can be seen that many of the Greek characters 56, at least about one-half of them in the present exemplary embodiment, are arranged to phonetically correspond with the positioning of the Latin characters of a QWERTY keyboard. For example, the Greek characters 56 <A> (alpha), <Σ> (sigma), <Δ> (delta), and <φ> (phi) are disposed sequentially adjacent one another at the left side of a middle row of the keypad 24, and so forth. Such arrangement phonetically and positionally corresponds with the Latin letters <A> <S> <D> <F> of a QWERTY keyboard. Such a phonetic positioning of the non-Latin characters 56, and/or the arrangement of the various characters for visual similarity with other characters, advantageously generates an association in a user's mind which facilitates the inputting of text. For instance, a user familiar with the placement of the Latin letters in a QWERTY format will more readily be able to input text comprising the non-Latin characters 56 of the keypad 24 due to the phonetic and/or visual similarity between the placement of the non-Latin characters 56 and the known QWERTY format. In this regard, it is understood that the handheld electronic device 4 may be comprised of keys 44 that do not have Latin characters 52 assigned thereto. For instance, the keypad 24 may be comprised of Greek characters 56 that are arranged, to the extent reasonably possible, in a phonetically QWERTY format. This advantageously facilitates the input of text in multiple languages and/or text comprising characters in multiple alphabets.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A keypad for an electronic device, the keypad comprising:
a plurality of input members structured to be actuatable to provide input to a processor apparatus of the electronic device;
at least some of the input members each having assigned thereto a Greek character that is inputtable to the electronic device upon actuation of the input member; and
at least one-half of the Greek characters being assigned to input members disposed such that said at least one-half of the Greek characters phonetically correspond with the Latin characters of a QWERTY keypad.

2. The keypad of Claim 1 wherein at least some of the input members each have assigned thereto a Latin character in addition to the Greek character.

3. The keypad of Claim 2 wherein, for at least some of the input members, the Latin character and the Greek character assigned thereto phonetically correspond with one another.

4. A handheld electronic device comprising:
a processor apparatus comprising a processor and a memory, the memory having stored therein a number of routines that are executable on the processor;
an input apparatus structured to provide input to the processor apparatus, the input apparatus comprising a keypad; and
the keypad comprising:
a plurality of input members that are actuatable to provide input to the processor apparatus;
at least some of the input members each having assigned thereto a Greek character that is inputtable upon actuation of the input member; and
at least one-half of the Greek characters being assigned to input members disposed such that said at least one-half of the Greek characters phonetically correspond with the Latin characters of a QWERTY keypad.

5. The handheld electronic device of Claim 4 wherein at least some of the input members each have assigned thereto a Latin character in addition to the Greek character.

6. The handheld electronic device of Claim 5 wherein, for at least some of the input members, the Latin character and the Greek character assigned thereto phonetically correspond with one another.

7. The handheld electronic device of Claim 5 wherein the input members are actuatable to input Latin characters when a first routine is executed on the processor, the input members being actuatable to input Greek characters when a second routine is executed on the processor.

## Amended claims

### Amended claims in accordance with Rule 137(2) EPC.

**1.** A handheld electronic device (4) configured for the inputting of text in a plurality of languages that employ characters in a plurality of alphabets, the handheld electronic device comprising:
a processor apparatus (16) comprising a processor (32) and a memory (36), the memory having stored therein a number of routines (40) that are executable on the processor;
an input apparatus (12) structured to provide text input to the processor apparatus, the input apparatus comprising a keypad (24); and
the keypad comprising:
a plurality of input members (44) that are actuatable to provide text input to the processor apparatus;
at least some of the input members each having assigned thereto a Greek character (56) that is inputtable as text upon actuation of the input member; and
at least one-half of the Greek characters being assigned to input members disposed such that said at least one-half of the Greek characters phonetically correspond with the Latin characters of a QWERTY keypad.

**2.** The handheld electronic device of Claim 1 wherein at least some of the input members each have assigned thereto a Latin character (52) in addition to the Greek character.

**3.** The handheld electronic device of Claim 2 wherein, for at least some of the input members, the Latin character and the Greek character assigned thereto phonetically correspond with one another.

**4.** The handheld electronic device of Claim 2 wherein the input members are actuatable to input Latin characters when a first routine is executed on the processor, the input members being actuatable to input Greek characters when a second routine is executed on the processor.
